Europäisches Patentamt

**European Patent Office**

Office européen des brevets

(19)

(11) Publication number: **0 057 970**
A2

(12)

# EUROPEAN PATENT APPLICATION

(21) Application number: **82300062.5**

(51) Int. Cl.³: **G 05 B 19/10**

(22) Date of filing: **07.01.82**

(30) Priority: **19.01.81 US 225879**

(43) Date of publication of application:
**18.08.82 Bulletin 82/33**

(84) Designated Contracting States:
**CH DE FR GB IT LI NL SE**

(71) Applicant: **HONEYWELL INC.**
**Honeywell Plaza**
**Minneapolis Minnesota 55408(US)**

(72) Inventor: **Bruggeman, Edward W.**
**110911 Von Hertzen Circle**
**Chaska Minnesota 55318(US)**

(72) Inventor: **Sanders, Ivar**
**14094 Hyde Avenue North**
**Hugo Minnesota 55038(US)**

(74) Representative: **Riddle, John et al,**
**Honeywell Control Systems Ltd. Patent Department**
**Charles Square**
**Bracknell, Berks.(GB)**

(54) Control systems including control panels.

(57) A control panel (10) is connected to a remote control device (11) for controlling remote apparatus (12), the control panel having a visual display device (13) and a closely associated manually operated switching apparatus (15) mounted below the display. Specifically, the display comprises twenty individual multi-segment character display units (14) capable of displaying a word or plurality of words. The switching apparatus has twenty individual button type switches (20) which can be interconnected or ganged to operate as a single switch unit, depending upon the length of the switch button area desired. Upon the digital display being divided into two words, the switch apparatus is ganged to provide two corresponding switch units, one under each word, for the convenience of the operator selecting the particular operation desired by pushing any one of the switching units directly beneath the selected visual display information.

./...

Croydon Printing Company Ltd.

FIG.1

- 1 -

## CONTROL SYSTEMS INCLUDING CONTROL PANELS

### Background of the Invention

Control panels connected to control closely associated apparatus or remote apparatus wherein the control panel has a display device with associated switches for controlling various devices and functions of the controlled apparatus are broadly old. In such control panels the greater the number of functions or individual apparatus being controlled or supervised, the more complex the control panel becomes. With the increased complexity, the operator requires more training and the chances of error in the operation increase. The present invention is concerned with an operator-interactive panel for making what might be a complicated system type of operation less complicated to reduce the possibility of operational error.

According to the present invention, there is provided a control system comprising a control panel having a row of character display units and a row of switch units, and means operable to display a plurality of groups of characters each group presenting a different control option to the system user, characterized by means to form the switch units into a plurality of groups each associated with a respective one of the groups of character display units, each switch group acting as a single switch whereby the user by operating any switch unit within a switch group can effect the corresponding control option.

An embodiment of the invention will now be described, by way of example, with reference to the accompanying drawings, in which:-

Figure 1 is a schematic drawing of a control system according to the invention, showing a control panel; microcomputer and remote apparatus controlled thereby.

Figure 2 is a representation of three particular types of functions of operation of the display units on the control panel, and

- 2 -

Figure 3 shows a character display unit.

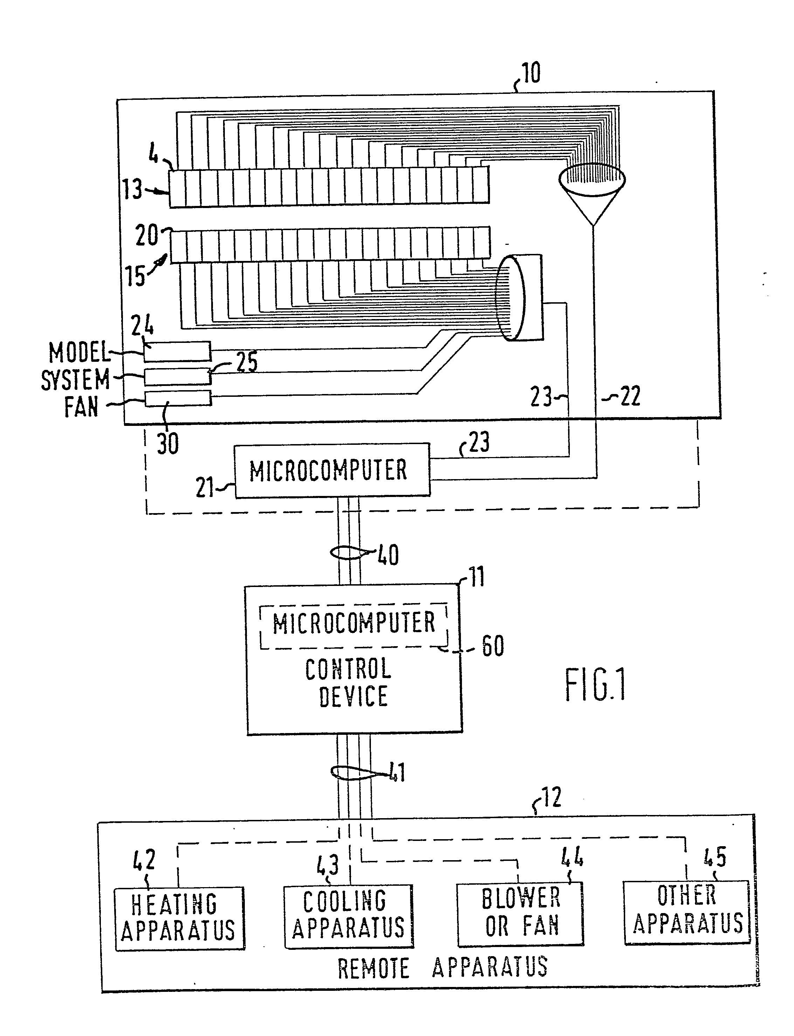

Referring to Figure 1, the control system includes a control panel or centre 10 connected to a control device 11 for controlling remote apparatus 12. Control panel 10 has a display apparatus or device 13 which is made up of a plurality (twenty) alphanumeric fourteen-segment display units 14 of the type made and sold by ISE Electronic Corporation as type No. FG206A2 for displaying a letter or number, or any other character, which is desired. A switch membrane apparatus 15 is made up of a plurality (twenty) keys or individual switch units 20 of the type made and sold by Sheldahl Inc. of Northfield, Minnesota. Such switch apparatus is adapted to be connected into a switching matrix circuit to be described. While the display device 13 and switching apparatus 15 have been selected to have twenty individual units, the particular number of units in the display device and the switching apparatus need not be that number or even the same, but, for explanation purposes, the number twenty is selected.

Control panel 10 has a microcomputer 21 of a conventional type of which the display apparatus 13 is connected over a communication link 22 and the switching apparatus 15 is connected over a communication link 23. Microcomputer might be of a type made and sold by Synertek Inc. of Santa Clara, California, No. Z8-01MCCPS 8 Bit Single-Chip Microcomputer Circuit.

Also connected to the microcomputer 21 and contained on the control panel are a number of switches 24,25, and 30, each of which is a push button type of switch for accomplishing a mode or function of the operation of the remote apparatus to which the control panel 10 is connected. These switches which are all a part of the switch membrane apparatus of 15 and matrix circuit 31 are connected by associated circuits 23 to the microcomputer 21.

The output circuit of control panel 10 is connected over a communication channel 40 to control device 11 which might be located in control panel 10 or at some remote locality to reduce the size of control panel 10. Control device 11 is connected by a communication channel 41 to remote apparatus 12. Remote apparatus 12 in this particular case is part of a temperature conditioning system which might be a home or office building having heating apparatus 42, cooling apparatus 43, a blower or fan 44, and other apparatus 45, for controlling and supervising various security, environments, and temperature conditions.

While the present system might be accomplished by hard wire switching apparatus, the complexity of such a hard wire apparatus would be great to greatly increase the cost of such a control panel. With the advent of a microprocessor or microcomputer having conventional ROM or E-PROM memory units, the operation of display apparatus 13 and associated switching apparatus 15 is greatly simplified by a program or software of the microcomputer. When a particular display is made on the display apparatus 13, to comprise a number of inidividual functions or grouping of display units 14, the individual switch units 20 of switching apparatus 15 are similarly grouped to form a single switch unit associated with each group of display units whereby the operator, upon selecting the function displayed, only manually pushes the switching apparatus in the area below the display group. The ease of operation of the control panel is thereby greatly increased.

Assume that control panel 10 is mounted in the wall of the living area of a home, and the remote apparatus 12 is the temperature conditioning apparatus, that is, heating apparatus, cooling apparatus, and other apparatus associated with the home. The remote control and supervision of such apparatus is accomplished from the control panel. While there are many types of operations, that is, other apparatus 45, which might be controlled and/or supervised from the control panel and the number of functions disclosed are limited, the present system is concerned with the display apparatus 13 and switching apparatus 15 as used in conjunction with any apparatus 12.

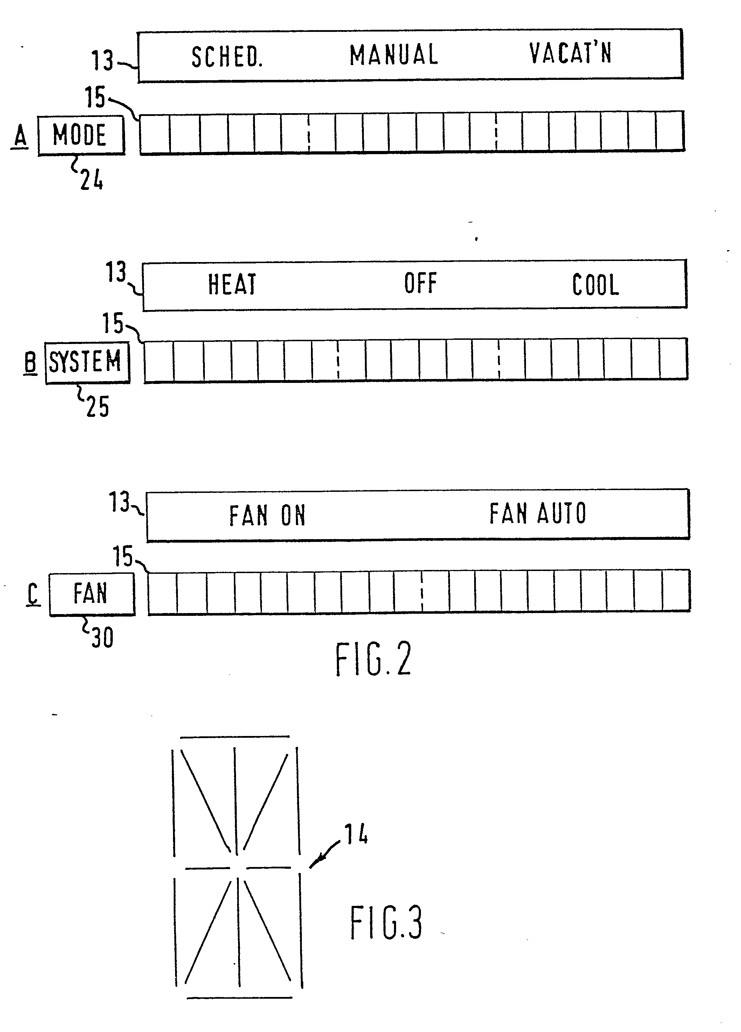

Assume that the mode of operation of the system of apparatus 12 attached to control panel 10 is to be selected, the home owner pushes mode switch 25 and the program of the microcomputer 21 brings about the energization of the display apparatus 13 as shown at A of Figure 2. The display is abbreviated showing of three modes of operation, that is, scheduled, manual, and vacation. Simultaneously, microcomputer 21 switches or gangs the individual switching units 20 of the switching apparatus 15 through an X-Y matrix circuit over communication link 23 to provide three groups of switches, that is, the switching units of each group are connected as in parallel so that the switching units operate as a single switching unit. Thus the switch apparatus 15 effectively has three switching units or areas below the display of the three modes of operation. The operator only has to push any switch unit in the area directly below one of the three words to obtain the operation of the system for one of the three modes. Microcomputer 21 responds to the selection to provide an output to control device 11 and its microcomputer 60 performs the desired operation of apparatus 12.

Another example is for the system selection, that is whether HEATING, COOLING or an OFF operation is desired. The operator pushes the SYSTEM switch 25 and, as shown at B of Figure 2, the display 13 provides the words HEAT, OFF, COOL. Simultaneously, the switching apparatus 15 is grouped into three groups of switches to allow the operator to push any switch unit in the area of the switching apparatus directly below the word to select the type of system desired. If HEAT was selected, a signal to control panel 11 operates heating apparatus 42.

Another type of operation is in the selection of the fan operation which is accomplished by pushing FAN switch 30. For a fan operation, the display apparatus 13 provides two displays, that is FAN ON and FAN AUTO, shown at C of Figure 2, and the microcomputer groups the switching units 14 of switch apparatus 15 into two single switching groups so that no matter where the operator pushed the switch apparatus below the FAN ON, the Fan On operation takes place.

While the control panel shows a number of functions which are selected by display apparatus 13 and switching apparatus 15, many other functions might be used in a control panel with the present system. Thus the present system matches the particular display of a display apparatus (such as 13) with a switching apparatus (such as 15) to provide for a single switching unit area below the individual words of the display by the grouping of switching units 14 to assist in the selection in the particular function displayed.

CLAIMS

1. A control system comprising a control panel having a row of character display units and a row of switch units, and means operable to display a plurality of groups of characters each group presenting a different control option to the system user, characterized by means (21) to form the switch units (15) into a plurality of groups each associated with a respective one of the groups of characters display units (13), each switch group acting as a single switch whereby the user by operating any switch unit within a switch group can effect the corresponding control option.

2. The control system of Claim 1, characterized in that said group forming means is a microcomputer (21) which also controls display units (14), the display units being multi-segment character forming units.

3. The control system of Claim 1 or 2, characterized in that the control panel (10) includes selection means (24,25,30) for selecting the type of operation of environmental conditioning apparatus.

FIG.1

| 13 | SCHED. | MANUAL | VACAT'N |

A | MODE 15 | |

24

| 13 | HEAT | OFF | COOL |

B | SYSTEM 15 | |

25

| 13 | FAN ON | FAN AUTO |

C | FAN 15 | |

30

FIG.2

14

FIG.3